# FASCICULE DE BREVET EUROPEEN

(11) **EP 0 313 440 B1**
(45) Date de publication et mention de la délivrance du brevet: **06.10.1993**
(21) Numéro de dépôt: 88402591.7
(22) Date de dépôt: 13.10.1988
(51) Int. Cl.: H05K 5/06, H01G 1/02, H01G 4/38, H02J 15/00

(54) **Enveloppe pour un dispositif de stockage d'énergie électrique à très haute tension et un tel dispositif**
Gehäuse für eine Vorrichtung zum Speichern von elektrischer Energie bei sehr hoher Spannung und eine solche Vorrichtung
Casing for a storage device for very high voltage electrical energy, and such a device

(30) Priorité: 19.10.1987 FR 8714375
(43) Date de publication de la demande: 26.04.1989
(73) Titulaire: AEROSPATIALE Société Nationale Industrielle, 75781 Paris Cédex 16 (FR)
(72) Inventeur: Lherm, André, F-35160 Le Haillan (FR); Raveu, Bernard, F-33160 Saint-Medard-en-Jalles (FR); Farenc, Jean, F-31650 Saint-Orens (FR)
(74) Mandataire: Bonnetat, Christian

(56) Documents cités:
- EP-A- 0 162 766
- CH-A- 347 865
- DE-U- 8 624 268
- GB-A- 297 425

## Description

La présente invention concerne une enveloppe pour un dispositif de stockage d'énergie électrique à très haute tension, particulièrement, quoique non exclusivement, approprié à être utilisé dans un générateur de Marx, et un tel dispositif.

On sait qu'un générateur de Marx est constitué par plusieurs étages de condensateur qui sont chargés en parallèle et déchargés en série. Chaque étage de condensateur peut être chargé sous des tensions supérieures à plusieurs centaines de kilovolts, de sorte que la tension et l'énergie disponibles à la sortie dudit générateur peuvent respectivement atteindre quelques mégavolts et quelques dizaines de kilojoules.

Par exemple, dans le document JAPANESE JOURNAL OF APPLIED PHYSICS, Vol.20 (1981) Dec.,No.12, Yusuke KUBOTA, Jun-ichi KODAIRA et Akira MIYAHARA décrivent un générateur de Marx, dans lequel l'ensemble des étages de condensateur est enfermé dans une enveloppe métallique étanche emplie d'un gaz diélectrique sous pression. Ledit ensemble des étages de condensateur est relié à ladite enveloppe par des supports. Ainsi, ladite enveloppe métallique réalise les trois fonctions suivantes :
a) soutien mécanique de l'ensemble des étages de condensateur ;
b) résistance à la pression (de l'ordre de 3 à 4 bars) du gaz diélectrique ; et
c) écoulement des charges électriques et faradisation de l'ensemble, afin de fixer le potentiel électrique autour desdits étages de condensateur.

Pour pouvoir remplir les fonctions a) et b) ci-dessus, il est nécessaire que ladite enveloppe métallique soit épaisse, de sorte qu'elle est lourde. Son poids représente généralement au moins de 30 à 40% du poids total du générateur de Marx.

La présente invention a pour objet principal de remédier à cet inconvénient et de permettre la réalisation d'un dispositif de stockage d'énergie, notamment pour générateur de Marx, qui soit allégé pour pouvoir éventuellement être facilement transportable.

A cette fin, selon l'invention, une enveloppe étanche pour un dispositif de stockage d'énergie électrique à très haute tension, notamment pour générateur de Marx, porté par un support et comportant une pluralité d'étages de condensateur enfermés dans ladite enveloppe étanche qui contient un gaz diélectrique sous pression, est susceptible d'assurer l'écoulement de charges électriques et porte mécaniquement lesdits étages de condensateur par l'intermédiaire de moyens d'appui intérieurs disposés entre la paroi interne de ladite enveloppe et lesdits étages de condensateur,
est remarquable en ce que ladite enveloppe étanche est constituée de fibres mécaniquement résistantes enrobées de résine synthétique et en ce que, en regard desdits moyens d'appui intérieurs qui présentent la forme de bloc, mais à l'extérieur de ladite enveloppe étanche, sont prévus des moyens d'appui extérieurs, également en forme de bloc, disposés entre la paroi externe de ladite enveloppe étanche et ledit support devant porter ledit dispositif de stockage d'énergie.

On voit ainsi que, grâce à l'invention, lesdits étages de condensateur ne sont pas directement portés par ladite enveloppe étanche, mais par lesdits moyens d'appui intérieurs et par lesdits moyens d'appui extérieurs, formant des blocs individuels et pressant entre eux ladite enveloppe. Celle-ci doit donc être prévue seulement pour résister à la pression du gaz diélectrique et à la pression entre lesdits moyens d'appui intérieurs et lesdits moyens d'appui extérieurs et non pas pour supporter les efforts mécaniques dus au poids desdits étages de condensateur. Elle peut donc être réalisée par un matériau composite fibres-résine synthétique.

De préférence, on prévoit des moyens de liaison mécanique, par exemple des vis, traversant de façon étanche ladite enveloppe et solidarisant lesdits moyens d'appui intérieurs et lesdits moyens d'appui extérieurs. L'étanchéité des passages desdits moyens de liaison mécanique est de préférence assurée par de la résine synthétique de même nature ou compatible avec celle de ladite enveloppe. De plus, on peut prévoir des moyens de fixation, tels que des sangles ou analogue, pour solidariser lesdits étages de condensateur sur lesdits moyens d'appui intérieurs.

Grâce à ces mesures, on voit qu'il n'est pas nécessaire que ledit dispositif de stockage d'énergie repose sur un support horizontal, lesdits moyens d'appui extérieurs formant alors un socle : au contraire, le dispositif de stockage d'énergie selon l'invention peut être suspendu ou porté en porte-à-faux par son support.

Pour assurer l'écoulement des charges électriques, ladite enveloppe étanche pourrait être constituée de fibres résistantes électriquement conductrices, telles que des fibres de carbone. Toutefois, dans un mode de réalisation avantageux, ladite enveloppe étanche est réalisée en fibres résistantes électriquement non conductrices, telles que des fibres de verre. Dans ce cas, on prévoit une métallisation de la face intérieure de ladite enveloppe. Une telle métallisation peut être obtenue par une feuille de clinquant ou analogue.

Par ailleurs, dans les générateurs de Marx connus, tels que celui mentionné ci-dessus, les étages de condensateur sont noyés dans un enrobage de résine synthétique diélectrique. Les résines synthétiques utilisées généralement à cet effet ont une densité élevée, de l'ordre de 1,7 g/cm3. Aussi, l'invention à pour objet un dispositif allégé, comportant une enveloppe étanche selon l'invention et dans lequel on réalise l'enrobage desdits étages de condensateur par une résine polyuréthanne, dont la densité est seulement de l'ordre de 1,1 g/cm3. Une telle résine peut être celle connue commercialement sous le nom de DAMIVAL (marque déposée).

De plus, afin de réduire autant que possible les coûts du dispositif, au lieu d'utiliser, comme cela est usuel, de l'hexafluorure de soufre comme gaz diélectrique, l'invention a pour objet un dispositif, comportant une enveloppe étanche selon l'invention et dans lequel le gaz diélectrique introduit dans ladite enveloppe étanche est un mélange d'hexafluorure de soufre et d'azote. Un tel mélange peut comporter 50% d'hexafluorure de soufre et 50% d'azote, en volume. Des essais ont montré que la rigidité électrique d'un tel mélange n'était pas très inférieure à celle de l'hexafluorure de soufre pur.

L'enveloppe étanche dudit dispositif de stockage d'énergie électrique peut être réalisée selon le mode de mise en oeuvre avantageux suivant: on bobine sur un mandrin des fibres résistantes enrobées de résine synthétique afin de réaliser une enveloppe au moins sensiblement fermée, on polymérise la résine synthétique de ladite enveloppe, puis, après polymérisation de ladite résine, on découpe ladite enveloppe en au moins deux tronçons et on agence des moyens de liaison étanche coopérants sur les bords en regard desdits tronçons.

Lorsque, comme mentionné ci-dessus, la métallisation de l'enveloppe est assurée par une feuille de clinquant, ladite feuille est disposée sur le mandrin avant le commencement du bobinage desdites fibres résistantes.

Les figures du dessin annexé feront bien comprendre comment l'invention peut être réalisée. Sur ces figures, des références identiques désignent des éléments identiques.

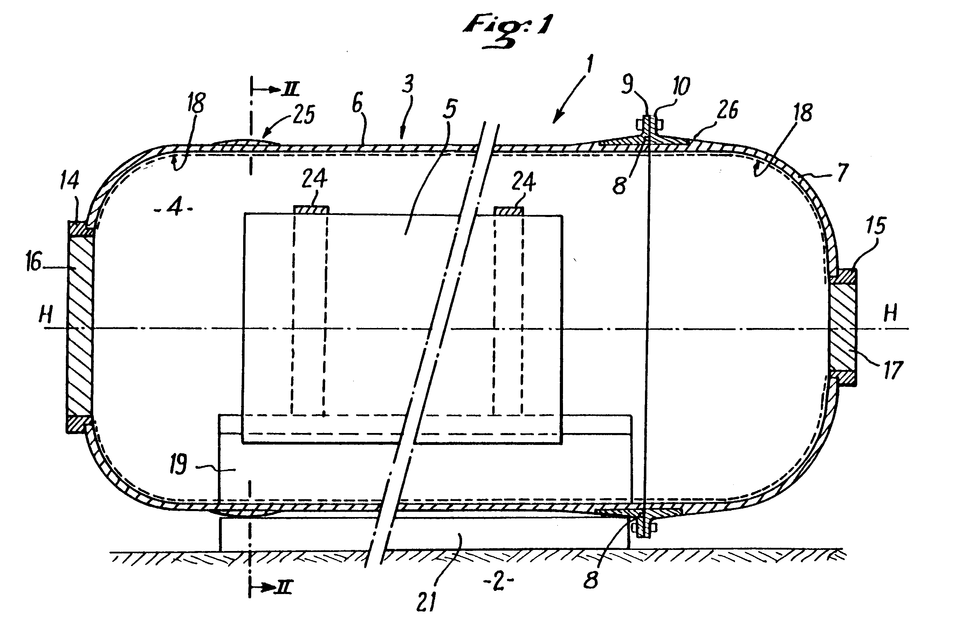

La figure 1 illustre schématiquement, en coupe longitudinale, un exemple de réalisation du dispositif selon l'invention.

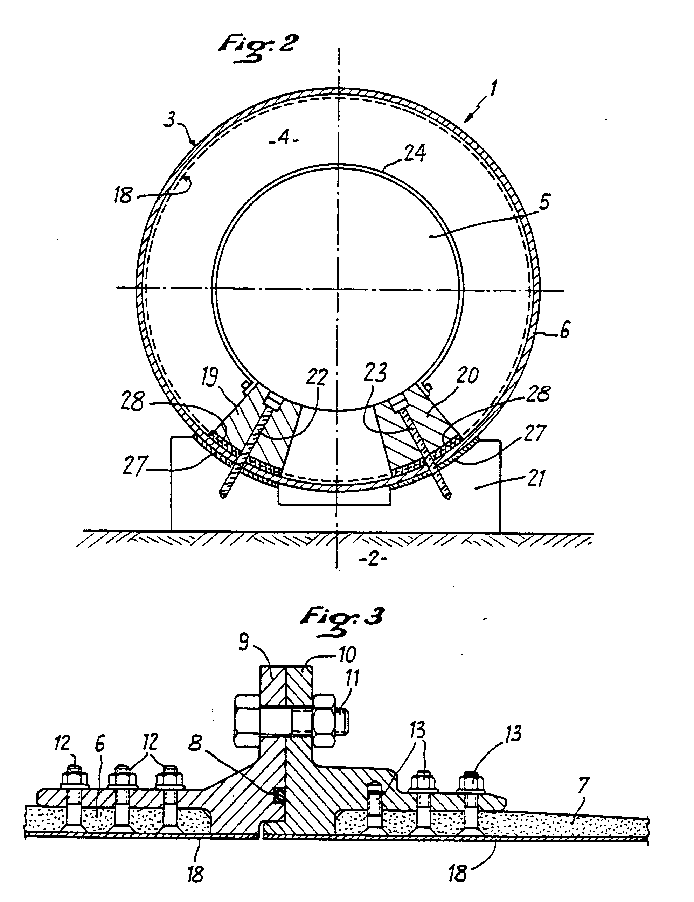

La figure 2 est une coupe selon la ligne II-II de la figure 1.
La figure 3 montre, à plus grande échelle, un détail de l'enveloppe des figures 1 et 2.

L'exemple particulier de réalisation de dispositif de stockage d'énergie électrique à très haute tension 1, notamment pour générateur de Marx à haute densité d'énergie, conforme à l'invention et montré par les figures, présente un axe horizontal H-H et repose sur un support horizontal 2. Il comporte une enveloppe fermée étanche 3, délimitant une enceinte 4, à l'intérieur de laquelle règne une ambiance d'un gaz diélectrique, constituée de 50% d'azote et de 50% d'hexafluorure de soufre (en volume). Dans l'enceinte 4 est agencé un ensemble 5 d'étages de condensateur, noyés dans une résine polyuréthanne diélectrique, de densité voisine de 1,1g/cm3.

L'enveloppe 3 est constituée d'un corps principal 6 et d'un couvercle 7, assemblés l'un à l'autre de façon étanche, grâce à un joint 8, par l'intermédiaire de brides métalliques coopérantes 9 et 10 et de boulons 11. Les brides 9 et 10 sont respectivement fixées au corps principal 6 et au couvercle 7 par des moyens de fixation 12 et 13. Le corps principal 6 et le couvercle 7 comportent respectivement des embases annulaires 14 et 15, elles-mêmes obturées de façon étanche par un bouchon 16 ou 17. Le corps principal 6 et le couvercle 7 sont réalisés en un matériau composite fibres de verre - résine époxy, comme il sera expliqué ci-après.

Une feuille de clinquant 18 recouvre la paroi intérieure du corps principal 6 et du couvercle 7.

Des appuis 19 et 20 en forme de blocs sont disposés entre les étages de condensateurs 5 et la paroi intérieure du corps principal 6, afin de supporter lesdits étages de condensateurs. A l'extérieur de l'enveloppe 3, un socle 21 en forme de bloc reposant sur le support 2 est disposé sous lesdits appuis 19 et 20. Des vis 22,23 traversant de façon étanche le corps principal 6 de l'enveloppe 3 solidarisent les appuis 19 et 20 du socle 21. Des sangles ou analogues 24, prenant appui sur lesdits appuis 19 et 20, entourent les étages de condensateur 5 et les solidarisent de ces derniers.

Pour réaliser le dispositif conforme à la présente invention, on peut agir de la façon suivante.

On commence par réaliser, en sable ou en métal, un mandrin de bobinage de l'enveloppe 3, c'est-à-dire de l'ensemble du corps principal 6 et du couvercle 7. Sur ce mandrin, on met en place les embases annulaires 14 et 15, ainsi que la feuille de clinquant 18. Ensuite, de façon connue et à l'aide d'une machine de bobinage également connue, on réalise des couches d'enroulements satellites et/ou circonférentiels de fibres de verre imprégnées de résine synthétique polymérisable. Au cours du bobinage, on peut prévoir des surépaisseurs de renfort 25,26, par exemple destinés à la mise en place ultérieure des brides 9 et 10 et/ou à l'appui de l'enveloppe 3 sur le socle 21.

Lorsque le bobinage est terminé, on procède à la polymérisation de la résine. L'enveloppe creuse 3 ainsi obtenue est ensuite coupée pour séparer le corps principal 6 du couvercle 7. Les brides 9 et 19 sont alors mises en place respectivement sur le corps principal 6 et sur le couvercle 7.

Par ailleurs, le corps principal 6 est posé sur le socle 21 et les appuis 19 et 20 sont disposés à l'intérieur dudit corps principal. Des couches de résines synthétiques 27,28 peuvent être prévues entre le corps principal 6, d'une part, et les appuis 19,20 et le socle 21 d'autre part, de sorte que la traversée des vis 22,23 est étanchéifiée.

Ensuite, l'ensemble 5 des étages de condensateur est mis en place sur les appuis 19 et 20, puis fixé à ceux-ci par les sangles 24. Le corps principal 26 est alors fermé par le couvercle 7, grâce à la coopération des brides 9 et 10 et des vis 11, avec interposition du joint 8.

La continuité électrique du clinquant 18 entre le corps principal 6 et le couvercle 7 est assurée par lesdites brides 9 et 10. Afin d'assurer l'étanchéité au niveau des vis 12 et 13, du clinquant peut être collé sur les têtes de ces dernières.

Bien entendu les appuis 19 et 20, ainsi que le socle 21 sont réalisés en des matières non électriquement conductrices, comme par exemple des matériaux composites.

## Revendications

1. Enveloppe étanche (3) pour un dispositif de stockage d'énergie électrique à très haute tension porté par un support (2) et comportant une pluralité d'étages de condensateur (5) enfermés dans ladite enveloppe étanche (3) qui contient un gaz diélectrique sous pression, est susceptible d'assurer l'écoulement de charges électriques et porte mécaniquement lesdits étages de condensateur (5) par l'intermédiaire de moyens d'appui intérieurs (19,20) disposés entre la paroi interne de ladite enveloppe et lesdits étages de condensateur,
caractérisée en ce que ladite enveloppe étanche est constituée de fibres mécaniquement résistantes enrobées de résine synthétique et en ce que, en regard desdits moyens d'appui intérieurs (19,20) qui présentent la forme de bloc, mais à l'extérieur de ladite enveloppe étanche (3), sont prévus des moyens d'appui extérieurs (21), également en forme de bloc, disposés entre la paroi externe de ladite enveloppe étanche (3) et ledit support (2) devant porter ledit dispositif de stockage d'énergie.

2. Enveloppe selon la revendication 1,
caractérisée en ce que des moyens de liaison mécanique (22,23) traversent de façon étanche ladite enveloppe (3) et solidarisent lesdits moyens d'appui intérieurs (19,20) et lesdits moyens d'appui extérieurs (21).

3. Enveloppe selon l'une des revendications 1 ou 2,
caractérisée en ce que des moyens de fixation (24) solidarisent lesdits étages de condensateur (5) sur lesdits moyens d'appui intérieurs (19,20)

4. Enveloppe selon l'une des revendications 1 à 3,
caractérisée en ce qu'elle est constituée de fibres résistantes électriquement conductrices, telles que des fibres de carbone.

5. Enveloppe selon l'une des revendications 1 à 3,
caractérisée en ce qu'elle est réalisée en fibres résistantes électriquement non conductrices, telles que des fibres de verre.

6. Enveloppe selon la revendication 5,
caractérisée en ce qu'elle comporte une métallisation (18) sur sa face intérieure.

7. Enveloppe selon la revendication 6,
caractérisée en ce que ladite métallisation est obtenue par une feuille (18) de clinquant.

8. Dispositif de stockage d'énergie électrique comportant une enveloppe étanche (3) selon l'une quelconque des revendications 1 à 7, dans lequel les étages de condensateur (5) sont noyés dans un enrobage de résine synthétique diélectrique,
caractérisé en ce que ledit enrobage est en une résine polyuréthane, dont la densité est de l'ordre de 1,1 g/cm3.

9. Dispositif de stockage d'énergie électrique comportant une enveloppe étanche (3) selon l'une des revendications 1 à 7,
caractérisé en ce que ledit gaz diélectrique est un mélange d'azote et d'hexafluorure de soufre.

10. Dispositif selon la revendication 9,
caractérisé en ce que, en volume, ledit gaz diélectrique est composé de 50 % d'hexafluorure de soufre.

## Claims

1. Sealed casing (3) for a device for storing electrical energy at very high voltage, borne by a support (2) and including a plurality of capacitor stages (5) enclosed in the said sealed casing (3) which contains a dielectric gas under pressure, is capable of providing the flow of electric charges, and mechanically bears the said capacitor stages (5) by the agency of internal bearing means (19, 20) arranged between the inner wall of the said casing and the said capacitor stages, characterised in that the said sealed casing is made up of mechanically strong fibres coated with synthetic resin and in that, facing the said internal bearing means (19, 20) which have the form of a block, but on the outside of the said sealed casing (3), external bearing means (21) are provided, likewise in the form of a block, arranged between the outer wall of the said sealed casing (3) and the said support (2) having to bear the said energy storage device.

2. Casing according to Claim 1, characterised in that mechanical linkage means (22, 23) pass through the said casing (3) in a sealed manner and rigidly connect the said internal bearing means (19, 20) and the said external bearing means (21).

3. Casing according to either of Claims 1 and 2, characterised in that fixing means (24) rigidly connect the said capacitor stages (5) to the said internal bearing means (19, 20).

4. Casing according to one of Claims 1 to 3, characterised in that it is made up of electrically conducting strong fibres, such as carbon fibres.

5. Casing according to one of Claims 1 to 3, characterised in that it is produced from electrically non-conducting strong fibres, such as glass fibres.

6. Casing according to Claim 5, characterised in that it includes a metallisation (18) on its internal face.

7. Casing according to Claim 6, characterised in that the said metallisation is obtained by means of a metal foil (18).

8. Electrical-energy storage device including a sealed casing (3) according to any one of Claims 1 to 7, in which the capacitor stages (5) are embedded in a coating of dielectric synthetic resin, characterised in that the said coating is made from a polyurethane resin, the density of which is of the order of 1.1 g/cm³.

9. Electrical-energy storage device including a sealed casing (3) according to one of Claims 1 to 7, characterised in that the said dielectric gas is a mixture of nitrogen and sulphur hexafluoride.

10. Device according to Claim 9, characterised in that the said dielectric gas is composed of 50% by volume of sulphur hexafluoride.

## Patentansprüche

1. Dichte Hülle (3) für eine Vorrichtung zum Speichern von elektrischer Energie mit sehr hoher Spannung, das von einem Träger (2) getragen wird und eine Vielzahl von Kondensatorstufen (5) enthält, die in der besagten dichten Hülle (3), welche ein unter Druck stehendes dielektrisches Gas enthält, eingeschlossen sind, die geeignet ist, den Abfluß der elektrischen Belastungen zu gewährleisten und die besagten Kondensatorstufen (5) mit Hilfe von inneren Abstützmitteln (19, 20), welche zwischen der inneren Wandung der besagten Hülle und den besagten Kondensatorstufen angeordnet sind, trägt,
dadurch gekennzeichnet, daß die besagte dichte Hülle aus mechanischen widerstandsfähigen in Kunstharz eingebetteten Fasern besteht und daß, gegenüber der besagten internen Abstützmittel (19, 20), die blockförmig sind, äußere ebenfalls blockförmige Abstützmittel (21), aber außerhalb der besagten dichten Hülle (3), vorgesehen sind, wobei diese zwischen der äußeren Wandung der besagten dichten Hülle (3) und dem besagten Träger (2), der die besagte Vorrichtung zum Speichern von Energie tragen soll, angeordnet sind.

2. Hülle nach dem Anspruch 1,
dadurch gekennzeichnet, daß mechanische Verbindungsmittel (22, 23) dicht die besagte Hülle (3) durchqueren und die besagten inneren Abstützmittel (19, 20) und die besagten äußeren Abstützmittel (21) verbinden.

3. Hülle nach einem der Ansprüche 1 oder 2,
dadurch gekennzeichnet, daß Befestigungsmittel (24) die besagten Kondenstorstufen (5) mit den inneren Abstützmittel (19, 20) fest verbinden.

4. Hülle nach einem der Ansprüche 1 bis 3,
dadurch gekennzeichnet, daß sie aus widerstandsfähigen elektrisch leitenden Fasern, wie Kohlenstoff-Fasern, besteht.

5. Hülle nach einem der Ansprüche 1 bis 3,
dadurch gekennzeichnet, daß sie aus widerstandsfähigen nicht elektrisch leitenden Fasern, wie Glasfasern, hergestellt ist.

6. Hülle nach dem Anspruch 5,
dadurch gekennzeichnet, daß sie auf ihrer Innenfläche einen Metallbelag (18) aufweist.

7. Hülle nach dem Anspruch 6,
dadurch gekennzeichnet, daß der besagte Belag aus einer Metallfolie (18) besteht.

8. Vorrichtung zum Speichern von elektrischer Energie,
die eine dichte Hülle (3) nach irgend einem der Ansprüche 1 bis 7 enthält, in welcher die Kondensatorstufen (5) in einer Einbettung aus dielektrischem Kunstharz getaucht sind,
dadurch gekennzeichnet, daß die besagte Einbettung aus einem Polyurethanharz mit einer Dichte von 1,1 g/cm³ besteht.

9. Vorrichtung zum Speichern von elektrischer Energie,
die eine dichte Hülle (3) nach einem der Ansprüche 1 bis 7 enthält,
dadurch gekennzeichnet, daß das besagte dielektrische Gas eine Mischung aus Stickstoff und Schwefelhexafluorid ist.

10. Vorrichtung nach dem Anspruch 9,
dadurch gekennzeichnet, daß in Volumen das besagte dielektrische Gas aus 50 % Schwefelhexafluorid zusammengesetzt ist.
